# EUROPÄISCHE PATENTSCHRIFT

(11) **EP 3 421 942 B1**
(45) Veröffentlichungstag und Bekanntmachung des Hinweises auf die Patenterteilung: **18.11.2020**
(21) Anmeldenummer: 18171460.1
(22) Anmeldetag: 09.05.2018
(51) Int. Cl.: G01D 11/24

(54) **HANDHABE MIT VERGUSSMASSE UND DICHTMITTEL**
HANDLE WITH FILLING COMPOUND AND SEALANT
ÉLÉMENT D'ACTIONNEMENT MANUEL POURVU DE MASSE DE REMPLISSAGE ET DE MOYEN D'ÉTANCHÉITÉ

(30) Priorität: 27.06.2017 DE 102017114220
(43) Veröffentlichungstag der Anmeldung: 02.01.2019
(73) Patentinhaber: Huf Hülsbeck & Fürst GmbH & Co. KG, 42551 Velbert (DE)
(72) Erfinder: Velicanin, Mensur, 42549 Velbert (DE)
(74) Vertreter: Patentanwälte Bals & Vogel

(56) Entgegenhaltungen:
- DE-A1-102012 107 189
- DE-A1-102013 114 000
- DE-A1-102014 107 977
- US-A1- 2005 236 846

## Beschreibung

Die vorliegende Erfindung betrifft eine Handhabe für ein Kraftfahrzeug mit einer Elektronikeinheit zur Überwachung mindestens eines Aktivierungsbereiches der Handhabe. Ferner bezieht sich die Erfindung auf ein Verfahren zur Herstellung der besagten Handhabe.

Es ist aus dem Stand der Technik bekannt, dass in eine Handhabe die Elektronikeinheit über mechanische Fixierungen befestigt ist. Hierbei ist es üblich, kapazitive Sensoren zur Überwachung eines Aktivierungsbereiches der Handhabe einzusetzen. Die kapazitiven Sensorelemente zeichnen sich durch eine hohe Zuverlässigkeit aus. Dennoch sind die kapazitiven Sensorelemente stark von Umgebungsbedingungen abhängig, wie Luftfeuchtigkeit, Niederschläge, etc. Die genannten Umgebungsbedingungen können die Kapazität des Sensorelementes beeinflussen, so dass die Überwachung des Aktivierungsbereichs der Handhabe aufgrund von Störeinflüssen erschwert werden kann. Aus dem Stand der Technik ist es bekannt, elastische Pads zwischen der Elektronikeinheit und der Gehäusekörperwandung, insbesondere dem Aktivierungsbereich anzuordnen. Nachteiligerweise kann in diese Pads nach einer gewissen Zeit Feuchtigkeit eindringen, wodurch die Kapazität des Sensorelements negativ beeinflusst werden kann. Aus der Druckschrift DE 10 2014 107 977 A1 ist ein Türgriff für ein Kraftfahrzeug bekannt, mit wenigstens einem Sensor, der in eine Vergussmasse aus einem feuchtigkeits- und gasdichten ersten Kunststoffmaterial eingebettet ist, welches zusätzlich von einem Schaumkörper aus einem zweiten Kunststoffmaterial umgeben ist. Aus der Druckschrift US 2005/0236846 A1 ist ein äußeres Türgriffsystem für Fahrzeuge bekannt, umfassend einen aus einem Griffhauptkörper und einer Abdeckung gebildeten Betätigungsgriff, ein paar Elektroden sowie eine Leiterplatte, auf der eine Erfassungsschaltung zum Erfassen einer Kapazitätsänderung zwischen den Elektroden vorgesehen ist, wobei die Elektroden und die Leiterplatte innerhalb des Betätigungsgriffs untergebracht sind. Z

Es ist daher eine Aufgabe der vorliegenden Erfindung, die voranstehend beschriebenen Nachteile zumindest teilweise zu beheben. Insbesondere ist es Aufgabe der vorliegenden Erfindung, eine Handhabe bereitzustellen, die gegen Umwelteinflüsse geschützt ist, wodurch die Funktionalität der Elektronikeinheit zur Überwachung des Aktivierungsbereichs der Handhabe gewährleistet ist. Zudem ist es Aufgabe der Erfindung, ein Verfahren zur Herstellung der erfindungsgemäßen Handhabe bereitzustellen.

Die voranstehende Aufgabe wird gelöst durch sämtliche Merkmale des unabhängigen Vorrichtungsanspruchs sowie durch sämtliche Merkmale des unabhängigen Verfahrensanspruchs.

Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Patentansprüche beschrieben sind, selbstverständlich auch im Zusammenhang mit dem erfindungsgemäßen Handhabe sowie dem erfindungsgemäßen Verfahren, und jeweils umgekehrt, so dass bezüglich der Offenbarung zu den einzelnen Erfindungsaspekten stets wechselseitig Bezug genommen wird bzw. werden kann.

Die Aufgabe wird gelöst durch ein Handhabe für ein Kraftfahrzeug, insbesondere für ein bewegliches Teil des Kraftfahrzeuges, mit einem Gehäusekörper, der eine Aufnahme aufweist, in der eine Elektronikeinheit zur Überwachung mindestens eines Aktivierungsbereiches der Handhabe angeordnet ist, wobei die Elektronikeinheit mindestens ein kapazitives Sensorelement aufweist, das von einer Vergussmasse umgeben ist. Hierbei ist vorgesehen, dass ein elektrisch nicht leitendendes Dichtmittel zumindest teilweise die Elektronikeinheit umgibt und das Dichtmittel die Aufnahme zwischen Elektronikeinheit und zumindest einer Wandung des Gehäusekörpers vollständig ausfüllt, wodurch die Überwachungsempfindlichkeit des Aktivierungsbereiches erhöht wird.

Das Zusammenspiel von Dichtmittel und Vergussmasse innerhalb der Aufnahme ist wichtig, um eine zuverlässige Fixierung der Elektronikeinheit innerhalb der Aufnahme zu erreichen. Die Vergussmasse sorgt insbesondere dafür, dass das Sensorelement in der Elektronikeinheit die korrekte Positionierung erhält sowie zuverlässig von Umwelteinflüssen geschützt ist. Insbesondere weist die Vergussmasse eine Dielektrizitätszahl εᵣ = 2 bis 6 auf. Das Dichtmittel füllt die Aufnahme zwischen der Elektronikeinheit und der Wandung des Gehäusekörpers, an der Außenseite der Aktivierungsbereich sich befindet, vollständig aus. Das Dichtmittel weist aufgrund seiner Materialeigenschaften eine Dielektrizitätszahl auf, die größer ist als ein Luftdielektrikum, so dass die Kapazität der Elektronikeinheit erhöht werden kann. Es zeigt sich, dass die Empfindlichkeit des mindestens einen kapazitiven Sensorelements erhöht wird, insbesondere das kapazitiv wirkende elektrische Feld fokussiert auf den Aktivierungsbereich wird. Das Dichtmittel hat zudem die Funktion die Elektronikeinheit in der Aufnahme des Gehäusekörpers in seiner Position zu fixieren. Die nicht elektrisch leitende Materialeigenschaft des Dichtmittels hat den Vorteil, dass das elektrische Feld des kapazitiven Sensorelements nicht gestört oder beeinflusst wird. Vorteilhafterweise weist das Dichtmittel eine Dielektrizitätszahl εᵣ von mehr als mindestens 1.5 auf. Das Dichtmittel füllt zwischen der Elektronikeinheit und der Wandung des Gehäusekörpers, an der der Aktivierungsbereich außenseitig vorgesehen ist, die Aufnahme vollständig, insbesondere ohne Lufteinschlüsse, aus. Die Dielektrizitätszahl εᵣ von mehr als 1,5 verstärkt die Kapazität des wirkenden elektrischen Feldes. Vorteilhafterweise weist das Dichtmittel eine Dielektrizitätszahl von 1,5 ≤ εᵣ ≤ 4 auf. Die Vergussmasse hingegen weist vorteilhafterweise eine Dielektrizitätszahl von 2 ≤ εᵣ ≤ 6 auf. Zwischen dem Aktivierungsbereich und dem kapazitiven Sensorelement befindet sich lediglich ein Vollmaterial, insbesondere aus Vergussmasse und Dichtmittel, wobei die Wandung des Gehäusekörpers unmittelbar am Dichtmittel und/oder an der Vergussmasse anliegt.

Der Gehäusekörper weist eine Gehäuseschale auf, die die zu einer Seite offene Aufnahme verschließt. In die offene Aufnahme lässt sich die Elektronikeinheit mit dem kapazitiven Sensorelement montagefreundlich einlegen. Nachdem das Dichtmittel in die Aufnahme eingebracht ist, kann die Gehäuseschale am Gehäusekörper befestigt werden. Vorteilhafterweise wird die Aufnahme durch die Geometrie des Gehäusekörpers sowie auch durch die Gehäuseschale begrenzt. Es ist denkbar, dass in dem Gehäusekörper oder in die Gehäuseschale die Elektronikeinheit eingebracht wird bzw. das Dichtmittel zugeführt wird. Beispielsweise kann eine Befestigung der Gehäuseschale am Gehäusekörper über form- und/oder kraftschlüssige Verbindungselemente erfolgen.

Das Dichtmittel ist als Klebemittel ausgeführt, wodurch die Elektronikeinheit in der Aufnahme befestigt ist und/oder die Gehäuseschale am Gehäusekörper befestigt ist. Das Dichtmittel ist vorteilhafterweise hochklebend, so dass hierdurch eine zuverlässige Befestigung zwischen Gehäusekörper und Gehäuseschale erzielt werden kann. Zusätzlich können Befestigungsmittel, wie Rastmittel vorgesehen sein, um die Gehäuseschale mit dem Gehäusekörper zu verbinden.

Auch ist es denkbar, dass die Elektronikeinheit derart ausgebildet ist, dass eine Annährung eines Benutzers an die Handhabe detektiert wird, insbesondere eine Berührung des Benutzers der Handhabe detektiert wird. Vorteilhafterweise weist die Handhabe eine innere Wandung und eine äußere Wandung auf, wobei die innere Wandung dem beweglichen Teil zugewandt ist und die äußere Wandung dem Außenbereich des Kraftfahrzeugs zugewandt ist, indem sich auch der Benutzer bewegt. Sowohl die innere Wandung als auch die äußere Wandung können einen Aktivierungsbereich für den Benutzer aufweisen. Jeder Aktivierungsbereich kann über ein separates kapazitives Sensorelement überwacht werden bzw. betrieben werden. Über eine Annäherung des Benutzers an dem jeweiligen Aktivierungsbereich kann eine definierte Aktion und/oder Signalauslösung seitens der Elektronikeinheit erfolgen. Über den Aktivierungsbereich der inneren Wandung lässt sich z. B. ein Entriegelungsvorgang des beweglichen Teils des Kraftfahrzeugs auslösen und/oder über den Aktivierungsbereich der äußeren Wandung kann ein Verriegelungsvorgang des beweglichen Teils des Kraftfahrzeugs ausgelöst werden. Die Elektronikeinheit kann derart ausgeführt sein, dass über eine definierte Gestik des Benutzers am Aktivierungsbereich eine Auslösung stattfindet, wobei die Gestik in der unmittelbaren Nähe des Aktivierungsbereichs erfolgen kann oder eine Berührung des Benutzers am Aktivierungsbereich erforderlich ist.

Ferner ist es denkbar, dass das Dichtmittel derart zwischen dem Sensorelement und Wandung des Gehäusekörpers und/oder der Gehäuseschale angeordnet ist, dass das elektrische Feld des kapazitiv wirkenden Sensorelementes verstärkt auf den Aktivierungsbereich gerichtet wird. Die Empfindlichkeit der Elektronikeinheit kann somit erfindungsgemäß erhöht werden. Die Feldlinien des elektrischen Feldes können über das Dichtmittel wirkungsvoll auf den jeweiligen Aktivierungsbereich gerichtet werden, wodurch eine hohe Überwachungsempfindlichkeit am Aktivierungsbereich erreicht wird.

Gemäß einer vorteilhaften Weiterbildung der Erfindung kann vorgesehen sein, dass die Elektronikeinheit ein Elektronikgehäuse aufweist, in dem das Sensorelement angeordnet ist. In einer vorteilhaften Ausführungsform kann zunächst das mindestens eine kapazitive Sensorelement in das Elektronikgehäuse eingelegt werden und mit der Vergussmasse vergossen werden. Es bildet sich eine Elektronikeinheit als modulares Bauteil. Das Elektronikgehäuse kann anschließend in die Aufnahme des Gehäusekörpers eingelegt werden. Insbesondere kann die Elektronikeinheit mit ihrem Elektronikgehäuse auch in die Aufnahme der Gehäuseschale eingelegt werden. Im Anschluss erfolgt das Einbringen des Dichtmittels in die Aufnahme, wobei das Dichtmittel dafür sorgt, dass die Elektronikeinheit in der Aufnahme fixiert wird und ein Vollkörper zwischen dem Aktivierungsbereich und der Elektronikeinheit ohne Lufteinschlüsse sich bildet.

Es ist ferner denkbar, dass das Elektronikgehäuse mit dem Gehäusekörper oder das Elektronikgehäuse mit der Gehäuseschale ein monolithisches Bauteil bilden. Um die Anzahl der Bauteile zu verringern, bildet das Elektronikgehäuse mit dem Gehäusekörper oder mit der Gehäuseschale ein gemeinsames Bauteil. Vorteilhafterweise ist das Gehäuse mit dem Gehäusekörper oder mit der Gehäuseschale materialeinheitlich ausgeführt. Denkbar ist, dass das Material für das Elektronikgehäuse unterschiedlich zum Gehäusekörper oder zur Gehäuseschale ausgeführt ist. Vorteilhafterweise ist das Elektronikgehäuse aus einem Kunststoffteil ausgeführt. Vorteilhafterweise bildet das Elektronikgehäuse mit dem Gehäusekörper oder mit der Gehäuseschale ein Kunststoffspritzgussteil.

Vorteilhaft ist es darüber hinaus, wenn im Rahmen der Erfindung das Elektronikgehäuse als ein separates Bauteil zum Gehäusekörper ausgeführt ist, wobei zwischen dem Aktivierungsbereich und der Elektronikeinheit das Dichtmittel angeordnet ist. Aus fertigungstechnischen Gründen kann es von Vorteil sein, das Elektronikgehäuse als separates Bauteil zum Gehäusekörper oder zur Gehäuseschale auszuführen. Das Elektronikgehäuse kann über Befestigungsmittel verfügen, die mit Gegenbefestigungsmitteln innerhalb des Gehäusekörpers oder der Gehäuseschale in Wirkverbindung bringbar sind, bevor das Dichtmittel in die Aufnahme gebracht wird.

Vorteilhafterweise kann bei der Erfindung vorgesehen sein, dass zwischen der Gehäuseschale und der Elektronikeinheit und zwischen der Elektronikeinheit und der der Gehäuseschale gegenüberliegenden Wandung des Gehäusekörpers das Dichtmittel angeordnet ist. Hierbei ist die Elektronikeinheit zumindest an zwei Seiten durch das Dichtmittel umschlossen, wobei vorteilhafterweise die Elektronikeinheit vollständig durch das Dichtmittel umfasst ist, wobei das Dichtmittel an der inneren als auch der äußeren Wandung, insbesondere an der Gehäuseschalenwandung und an der Gehäusekörperwandung dichtend und/oder klebend anliegt. Ein Eindringen von Umwelteinflüssen, wie Staub, Feuchtigkeit, etc. wird hierdurch verhindert, so dass das elektrische Feld des kapazitiven Sensorelements nicht negativ beeinflusst wird.

Außerdem ist es von Vorteil, wenn ein erster Aktivierungsbereich an der Gehäuseschale vorliegt und ein zweiter Aktivierungsbereich an der der Gehäuseschale gegenüberliegenden Wandung vorliegt, wobei insbesondere eine Berührung des ersten Aktivierungsbereiches durch Elektronikeinheit detektierbar ist und eine Annährung des zweiten Aktivierungsbereiches an der der Gehäuseschale gegenüberliegenden Wandung detektierbar ist. Über die Berührung des ersten Aktivierungsbereiches kann ein Signal durch die Elektronikeinheit ausgelöst werden, um eine Aktion am beweglichen Teil des Kraftfahrzeugs, auszulösen. Die Aktion kann sein, dass ein mechanisches Schloss am beweglichen Teil aktiviert wird, wie z. B. das Schloss das bewegliche Teil in einen Verriegelungszustand oder in einen Entriegelungszustand bringt. Das Gleiche gilt auch für den zweiten Aktivierungsbereich, der eine Annäherung detektieren kann. Selbstverständlich kann auch der erste und/oder zweite Aktivierungsbereich ausschließlich eine Berührung oder eine Annäherung detektieren, was anwendungsspezifisch variiert werden kann.

Es ist ferner denkbar, dass die Gehäuseschale eine Aufnahme aufweist, in der die Elektronikeinheit sich zumindest teilweise befindet. Hierbei kann die Elektronikeinheit mit dem Elektronikgehäuse in die Aufnahme der Gehäuseschale eingebracht werden. Denkbar ist ebenfalls, dass das Elektronikgehäuse in der Gehäuseschale integriert ist.

Ferner kann es im Rahmen der Erfindung vorgesehen sein, dass das Dichtmittel aus einem Elastomer gebildet ist, insbesondere dass das Dichtmittel ein Kunststoff auf Polyurethanbasis ist, das blasen- und/oder porenfrei ist. Hierdurch wird ein hoher Schutz der Elektronikeinheit, insbesondere des kapazitiven Sensorelements erzielt. Das Dichtmittel mit elastomeren Eigenschaften gewährleistet eine Komprimierbarkeit bei der Befestigung der Gehäuseschale an den Gehäusekörper, wodurch ein Eindringen von Umwelteinflüssen, wie beispielsweise Feuchtigkeit erschwert wird, da sich das Dichtmittel bei der Komprimierung in der Aufnahme ausdehnt und in kleinste Zwischenräume gelangt. Ein zuverlässiges Abdichten sowie Verkleben der Elektronikeinheit innerhalb der Aufnahme wird somit erreicht.

Ebenfalls Gegenstand der Erfindung ist ein Verfahren zur Herstellung einer Handhabe eines Kraftfahrzeuges, insbesondere nach einem der genannten Vorrichtungsansprüche, mit mindestens einem kapazitiven Sensorelement zur Überwachung mindestens eines Aktivierungsbereiches der Handhabe und einem Gehäusekörper, der eine zumindest zu einer Seite geöffnete Aufnahme für das Sensorelement aufweist. Hierbei ist vorgesehen, dass folgende Schritte ausgeführt werden:
- Vergießen des Sensorelementes mit einer Vergussmasse, wobei nach dem Aushärten der Vergussmasse eine Elektronikeinheit entsteht,
- Einführen eines Dichtmittels in die Aufnahme des Gehäusekörpers, wobei das Dichtmittel eine vielfach höhere Viskosität als die Vergussmasse aufweist, so dass das Dichtmittel zumindest teilweise aus der Aufnahme herausragt,
- Verschließen der Aufnahme mit einer Gehäuseschale, wobei zumindest teilweise das Dichtmittel durch die Gehäuseschale verdrängt wird und die innerhalb der Aufnahme angeordnete Elektronikeinheit durch das Dichtmittel zumindest teilweise umfasst wird und abgedichtet wird.

Damit bringt das erfindungsgemäße Verfahren die gleichen Vorteile mit sich, wie sie ausführlich mit Bezug auf die erfindungsgemäße Handhabe genannt sind. Vorteilhafterweise ragt das Dichtmittel aufgrund seiner hohen Viskosität teilweise aus der Aufnahme heraus. Die Masse des Dichtmittels ist so konzipiert, dass ein "Überlaufen" des Dichtmittels verhindert ist. Das Dichtmittel, das ebenfalls als Klebmittel ausgebildet ist, kann bei der Befestigung der Gehäuseschale komprimiert werden, wobei das Dichtmittel in weitere Bereiche der Aufnahme verdrängt werden kann.

Ebenfalls kann es vorgesehen sein, dass die Elektronikeinheit in die Aufnahme eingebracht wird, bevor das Dichtmittel in die Aufnahme eingebracht wird. Hierbei kann die Elektronikeinheit in die Aufnahme der Gehäuseschale oder des Gehäusekörpers eingesetzt werden, bevor das Dichtmittel in die Aufnahme eingebracht wird. Beispielsweise kann die Elektronikeinheit über ein separates Elektronikgehäuse verfügen, in dem das Sensorelement sich befindet. Die Vergussmasse wird in dieses Elektronikgehäuse eingeführt, wobei im ausgehärteten Zustand der Vergussmasse die Elektronikeinheit entsteht. Die Elektronikeinheit kann dann in die Aufnahme der Gehäuseschale oder des Gehäusekörpers eingesetzt werden, bevor das Dichtmittel in die Aufnahme eingebracht wird.

In einer weiteren Möglichkeit kann vorgesehen sein, dass die Vergussmasse in die Gehäuseschale eingebracht wird. Die Gehäuseschale kann z. B. mit einem Elektronikgehäuse ein gemeinsames Bauteil bilden. Das mindestens eine kapazitive Sensorelement befindet sich innerhalb des Elektronikgehäuses der Gehäuseschale, in das die Vergussmasse eingebracht wird. Anschließend erfolgt eine Einbringung des Dichtmittels in die Aufnahme, so dass zumindest teilweise die Elektronikeinheit durch das Dichtmittel umfasst ist.

Vorteilhaft ist es darüber hinaus, wenn im Rahmen der Erfindung beim Verschließen der Aufnahme das Dichtmittel komprimiert wird. Die Komprimierbarkeit des Dichtmittels gewährleistet, dass der Raum zwischen der Elektronikeinheit und dem jeweiligen Aktivierungsbereich luftfrei, blasen- und porenfrei bleibt, um ein Eindringen von beispielsweise Feuchtigkeit zu vermeiden.

Vorteilhafterweise kann im Rahmen der Erfindung vorgesehen sein, dass das Dichtmittel zwischen der Gehäuseschale und der Elektronikeinheit und/oder zwischen der Elektronikeinheit und der der Gehäuseschale gegenüberliegenden Wandung des Gehäusekörpers gelangt. Nach einer weiteren Möglichkeit kann vorgesehen sein, dass das Dichtmittel in die Aufnahme eingegossen oder eingeschäumt wird. Das Dichtmittel kann entsprechend ausgebildet sein, indem genau abgestimmte Mengen des das Dichtmittel ausbildenden Kunststoffs in die Aufnahme gegossen oder eingeschäumt werden.

Es kann von Vorteil sein, wenn im Rahmen der Erfindung die Elektronikeinheit in der Aufnahme mechanisch vorfixiert wird, bevor das Dichtmittel in die Aufnahme eingebracht wird. Die Endfixierung erfolgt über das Dichtmittel, dass eine zusätzliche Befestigungsfunktion als Klebemittel aufweist.

Ferner kann im Rahmen der Erfindung vorgesehen sein, dass das Dichtmittel in einem Bereich des Gehäusekörpers aus der Aufnahme herausragt, an dem der Aktivierungsbereich der Handhabe sich befindet. Im Bereich des Aktivierungsbereichs erfolgt vorteilhafterweise die größte Komprimierung des Dichtmittels, wodurch wirkungsvoll eine luftfreie Situation zwischen dem Aktivierungsbereich und der Elektronikeinheit geschaffen wird.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig.1: Ein mögliches Ausführungsbeispiel einer erfindungsgemäßen Handhabe mit einer Elektronikeinheit, die durch ein Dichtmittel umfasst ist,
- Fig. 2: eine erfindungsgemäße Handhabe gemäß Figur 1 in einer weiteren Schnittansicht,
- Fig. 3: ein weiteres Ausführungsbeispiel einer erfindungsgemäßen Handhabe mit einer Elektronikeinheit, die von einem Dichtmittel umfasst ist,
- Fig. 4: die erfindungsgemäße Handhabe gemäß Figur 3 in einer weiteren Schnittansicht,
- Fig. 5: ein weiteres Ausführungsbeispiel einer erfindungsgemäßen Handhabe mit einer Elektronikeinheit, die in einer Gehäuseschale der Handhabe angeordnet ist,
- Fig. 6: ein weiteres Ausführungsbeispiel einer erfindungsgemäßen Handhabe mit einer Elektronikeinheit, die in der Gehäuseschale der Handhabe positioniert ist,
- Fig. 7: ein weiteres Ausführungsbeispiel einer erfindungsgemäßen Handhabe in einem Vormontagezustand,
- Fig. 8: die erfindungsgemäße Handhabe gemäß Figur 7 in einem Endmontagezustand und
- Fig. 9: mögliche Einbausituationen der erfindungsgemäßen Handhabe in einem Kraftfahrzeug.

In den nachfolgenden Figuren werden für die gleichen technischen Merkmale auch von unterschiedlichen Ausführungsbeispielen die identischen Bezugszeichen verwendet.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

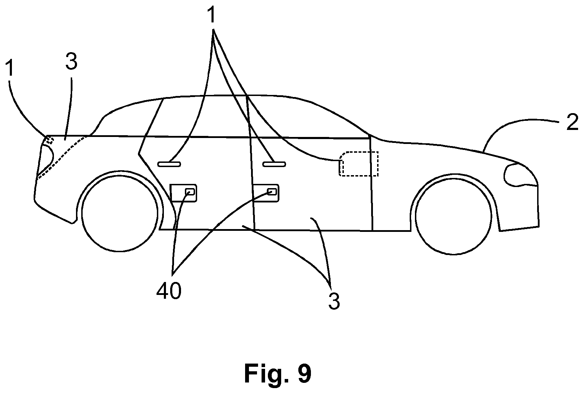

Gemäß der gezeigten Ausführungsbeispiele ist eine erfindungsgemäße Handhabe 1 für ein Kraftfahrzeug 2 beschrieben. Die Handhabe 1 kann an einem beweglichen Teil 3 des Kraftfahrzeugs 2 angeordnet sein, was exemplarisch in Figur 9 gezeigt ist. Das bewegliche Teil 3 kann beispielsweise eine Tür oder eine Heckklappe oder das Handschuhfach innerhalb des Kraftfahrzeugs sein. Die Handhabe 1 ist z. B. ein Türgriff oder ein Heckgriff. In sämtlichen Ausführungsbeispielen weist die Handhabe 1 einen Gehäusekörper 10 auf, der mit einer Aufnahme 11 ausgebildet ist, in der eine Elektronikeinheit 30 aufgenommen ist. Die Elektronikeinheit 30 dient zur Überwachung mindestens eines Aktivierungsbereichs 4 der Handhabe 1. Die Elektronikeinheit 30 weist mindestens ein kapazitives Sensorelement 31 auf, dass von einer Vergussmasse 32 isolierend und abdichtend umgeben ist.

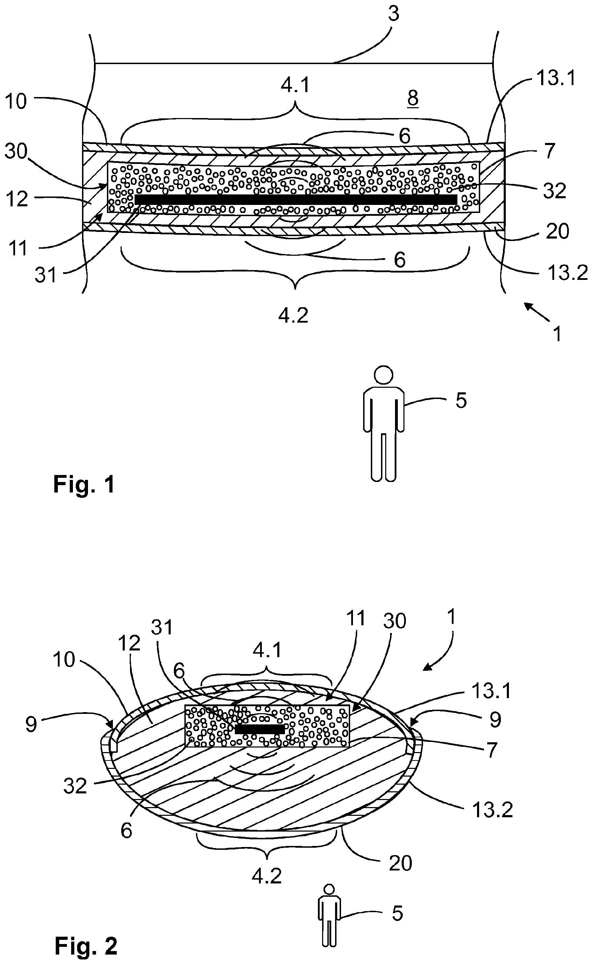

Die Handhabe 1 weist eine innere Wandung 13.1 und eine äußere Wandung 13.2 auf, welches in Figur 1 gezeigt ist. Zwischen dem beweglichen Teil 3 und der inneren Wandung 13.1 bzw. dem Gehäusekörper 10 befindet sich ein Zwischenraum 8. Die äußere Wandung 13.2 kann z. B. ein separates Bauteil zum Gehäusekörper 10 sein. In den gezeigten Ausführungsbeispielen ist dieses separate Bauteil eine Gehäuseschale 20, die die Aufnahme 11 des Gehäusekörpers 10 verschließt.

Um eine zuverlässige Funktionsweise der Elektronikeinheit 30 zu gewährleisten, ist in sämtlichen Ausführungsbeispielen ein Dichtmittel 12 vorgesehen, welches sich in der Aufnahme 11 befindet. Das Dichtmittel 12 dient zur zuverlässigen Abdichtung der Elektronikeinheit 30 sowie als Fixierungsmittel für die Elektronikeinheit 30 und/oder für die Gehäuseschale 20. Die Handhabe 1 weist zumindest einen Aktivierungsbereich 4 auf, der sich an der inneren Wandung 13.1 oder an der äußeren Wandung 13.2 bzw. an der Gehäuseschale 20 befinden kann. Gemäß Figur 1 und 2 sind ein erster Aktivierungsbereich 4.1 und ein zweiter Aktivierungsbereich 4.2 vorgesehen. Greift der Benutzer 5 in den Zwischenraum 8 und näher sich dem zweiten Aktivierungsbereich 4.2, wird dieses durch die Elektronikeinheit 30 kapazitiv erkannt. Berührt der Benutzer 5 den ersten Aktivierungsbereich 4.1 wird dieses ebenfalls durch ein kapazitives Sensorelement 31 detektiert. In beiden Fällen wird eine Aktion innerhalb des Kraftfahrzeugs 2 ausgelöst, insbesondere kann hierdurch ein Schloss 40 gemäß Figur 9 aktiviert werden, um z. B. das bewegliche Teil 3 in einen Verriegelungszustand oder einen Entriegelungszustand zu bringen.

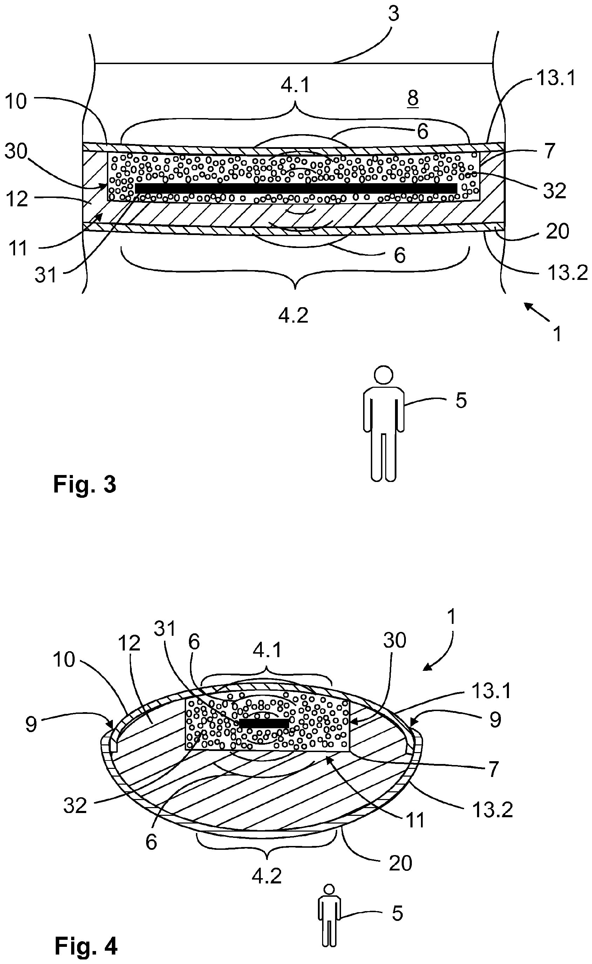

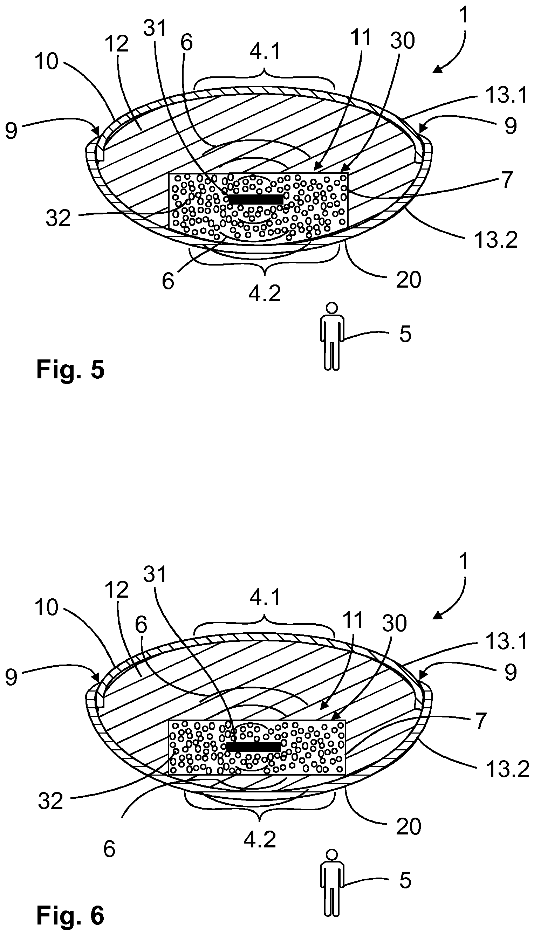

Gemäß Figur 1 und 2 weist die Elektronikeinheit 30 ein Elektronikgehäuse 7 auf, in dem das Sensorelement 30 angeordnet ist. Die Elektronikeinheit 30 ist vollständig durch das Dichtmittel 12 umfasst. Das Dichtmittel 12 liegt unmittelbar an der Gehäuseschale 20 sowie an der inneren Wandung 13.1 des Gehäusekörpers 10 an. Zwischen der Elektronikeinheit 30 und der inneren Wandung 13.1 sowie der Gehäuseschalte 20 befindet sich das Dichtmittel 12 als Vollkörper ohne jegliche Lufteinschlüsse. Die Vergussmasse 32 sowie das Dichtmittel 12 weisen jeweils eine Dielektrizitätszahl εᵣ auf, die größer ist als ein Luftdielektrikum. Somit lässt sich ein elektrisches Feld 6 des Sensorelements 31 aufbauen, mit dem der oder die Aktivierungsbereiche 4 zuverlässig mit einer hohen Empfindlichkeit überwacht werden können. Es besteht nicht die Gefahr, das Luft und/oder Feuchtigkeit zwischen dem jeweiligen Aktivierungsbereich und der Elektronikeinheit 30 gelangen kann, welches nachteiligerweise mit einer Störung der Funktionalität der Elektronikeinheit 30 verbunden wäre. Das Gleiche gilt auch für die Ausführungsbeispiele gemäß Figur 3 bis Figur 8. Im Ausführungsbeispiel der Figur 3 und 4 ist das Elektronikgehäuse 7 mit dem Gehäusekörper 10 als monolithisches Bauteil ausgebildet. In Figur 5 bilden das Elektronikgehäuse 7 sowie die Gehäuseschale 20 ein gemeinsames Bauteil. Die Vergussmasse 32 füllt die Kavität des Elektronikgehäuses 7, in dem das Sensorelement 31 sich befindet, aus. Umfasst wird die Elektronikeinheit 30 gemäß Figur 3 bis Figur 5 durch das Dichtmittel 12.

In Figur 6 ist ein Ausführungsbeispiel der Handhabe der Figur 1 gezeigt, bei der das Elektronikgehäuse 7 ein separates Bauteil zur Gehäuseschale 20 ausgeführt ist. Auch hier ist die Kavität des Elektronikgehäuses 7 mit der Vergussmasse 32 ausgefüllt, wodurch das Sensorelement 31 zuverlässig abgedichtet und isoliert ist.

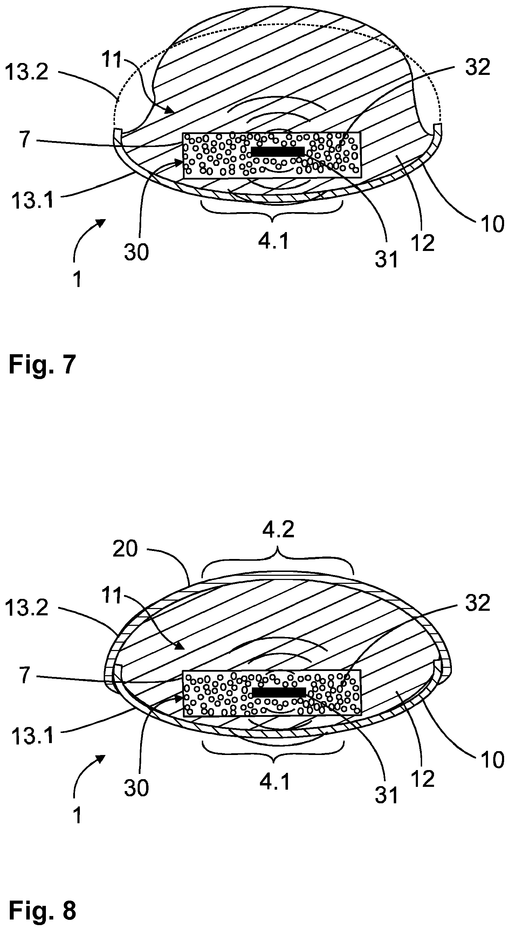

In Figur 7 und 8 ist das prinzipielle Verfahren schematisch dargestellt, wie das Dichtmittel 12 in die Aufnahme 11 positioniert wird, bevor die Aufnahme 11 über die Gehäuseschale 20 verschlossen wird. Das Dichtmittel 12 weist eine höhere Viskosität als die der Vergussmasse 32 auf. Nachdem die Elektronikeinheit 30 in die Aufnahme 11 der Handhabe 1, insbesondere des Gehäusekörpers 10 oder der Gehäuseschale 20 eingebracht wird, erfolgt ein Einbringen des Dichtmittels 12. Hierbei ragt das Dichtmittel 12 zumindest teilweise aus der Aufnahme 11 heraus. Aufgrund seiner hohen Viskosität fließt das Dichtmittel 12 gemäß Figur 7 "nicht weg", sondern kann turmartig gemäß Figur 7 seine Position halten. Anschließend kann die Aufnahme 11 mit der Gehäuseschale 20 verschlossen werden, wobei zumindest teilweise das Dichtmittel 12 durch die Gehäuseschale 20 verdrängt werden kann. Wichtig ist jedoch, dass das Dichtmittel 12 komprimierbar ist, so dass nach dem Einsetzen der Gehäuseschale 20 das Dichtmittel 12 vollständig an der inneren Wandung der Gehäuseschale 20 sowie an der Elektronikeinheit 30 anliegt, s. Figur 8. Dieses in Figur 7 und 8 gezeigte Prinzip ist auf die Ausführungsbeispiele gemäß Figur 1 bis Figur 6 anwendbar. Gemäß Figur 1 bis Figur 4 erfolgt ein Einführen des Dichtmittels 12 in die Aufnahme 11, nachdem die Elektronikeinheit 30 in die Aufnahme 11 eingesetzt wurde, bzw. die Vergussmasse 32 in das Elektronikgehäuse 7 eingegossen wurde. Nachdem das Dichtmittel 12 in die Aufnahme 11 eingeführt wurde, ragt das Dichtmittel 12 zumindest teilweise aus der Aufnahme 11 heraus. Beim Einsetzen und Befestigen der Gehäuseschale 20 an dem Gehäusekörper 10 erfolgt eine Komprimierung des Dichtmittels 12, wobei teilweise das Dichtmittel 12 in möglicherweise vorhandene freie Verdrängungskavitäten 14 gedrückt werden kann.

Gemäß Figur 5 und 6 befindet sich die Elektronikeinheit 30 an der Gehäuseschale 20. In beiden Ausführungsbeispielen erfolgt eine Einbringung des Dichtmittels 12 in die Aufnahme 11, beispielsweise in den Gehäusekörper 10 oder die Aufnahme 11 der Gehäuseschale 20, wobei auch hier das Dichtmittel 12 teilweise aus der Aufnahme 11 herausragt. Beim Befestigen der Gehäuseschale 20 mit dem Gehäusekörper 10 erfolgt eine Komprimierung des Dichtmittels 12. Vorteilhafterweise ragt gemäß sämtlicher Ausführungsbeispiele das Dichtmittel 12 dort aus der Aufnahme 11 heraus, an dem der Aktivierungsbereich 4 der Handhabe 1 sich befindet.

Die Elektronikeinheit 30 gemäß sämtlicher Ausführungsbeispiele kann auch mehrere nicht explizit dargestellte Sensorelemente 31 aufweisen, wobei ein erstes Sensorelement 31 für den ersten Aktivierungsbereich 4.1 und ein weiteres Sensorelement 31 für den zweiten Aktivierungsbericht 4.2 zuständig ist.

### Bezugszeichenliste

- 1: Handhabe
- 2: Kraftfahrzeug
- 3: bewegliches Teil
- 4: Aktivierungsbereich
- 4.1: erster Aktivierungsbereich
- 4.2: zweiter Aktivierungsbereich
- 5: Benutzer
- 6: elektrisches Feld
- 7: Elektronikgehäuse
- 8: Zwischenraum
- 9: Befestigungsbereich

- 10: Gehäusekörper
- 11: Aufnahme
- 12: Dichtmittel
- 13: Wandung
- 13.1: innere Wandung
- 13.2: äußere Wandung
- 14: Verdrängungskavität

- 20: Gehäuseschale

- 30: Elektronikeinheit
- 31: Sensorelement
- 32: Vergussmasse

- 40: Schloss

## Patentansprüche

1. Handhabe (1) für ein Kraftfahrzeug (2), insbesondere für ein bewegliches Teil (3) des Kraftfahrzeuges (2), mit
einem Gehäusekörper (10), der eine Aufnahme (11) aufweist, in der eine Elektronikeinheit (30) zur Überwachung mindestens eines Aktivierungsbereiches (4) der Handhabe (1) angeordnet ist, wobei die Elektronikeinheit (30) mindestens ein kapazitives Sensorelement (31) aufweist, das von einer Vergussmasse (32) umgeben ist,
wobei ein elektrisch nicht leitendendes Dichtmittel (12) zumindest teilweise die Elektronikeinheit (30) umgibt und das Dichtmittel (12) die Aufnahme (11) zwischen Elektronikeinheit (30) und zumindest einer Wandung (13) des Gehäusekörpers (10) vollständig ausfüllt, wodurch die Überwachungsempfindlichkeit des Aktivierungsbereiches (4) erhöht wird,
**dadurch gekennzeichnet,**
**dass** der Gehäusekörper (10) eine Gehäuseschale (20) aufweist, die die zu einer Seite offene Aufnahme (11) verschließt, wobei das Dichtmittel (12) als Klebemittel ausgeführt ist, wodurch die Elektronikeinheit (30) in der Aufnahme (11) befestigt ist und/oder die Gehäuseschale (20) am Gehäusekörper (10) befestigt ist, wobei das Dichtmittel (12) dauerelastisch ist.

2. Handhabe (1) nach Anspruch 1,
**dadurch gekennzeichnet,**
**dass** die Elektronikeinheit (30) derart ausgebildet ist, dass eine Annährung eines Benutzers (5) an die Handhabe (1) detektiert wird, insbesondere eine Berührung des Benutzers (5) der Handhabe (1) detektiert wird.

3. Handhabe (1) nach einem der vorhergehenden Ansprüche,
**dadurch gekennzeichnet,**
**dass** das Dichtmittel (12) derart zwischen dem Sensorelement (31) und Wandung (13) des Gehäusekörpers (10) und/oder der Gehäuseschale (20) angeordnet ist, dass das elektrische Feld (6) des kapazitiv wirkenden Sensorelementes (31) verstärkt auf den Aktivierungsbereich (4) gerichtet wird.

4. Handhabe (1) nach einem der vorhergehenden Ansprüche,
**dadurch gekennzeichnet,**
**dass** die Elektronikeinheit (30) ein Elektronikgehäuse (7) aufweist, in dem das Sensorelement (31) angeordnet ist, wobei das Elektronikgehäuse (7) mit dem Gehäusekörper (10) oder das Elektronikgehäuse (7) mit der Gehäuseschale (20) ein monolithisches Bauteil bilden.

5. Handhabe (1) nach einem der vorhergehenden Ansprüche,
**dadurch gekennzeichnet,**
**dass** das Elektronikgehäuse (7) als ein separates Bauteil zum Gehäusekörper (10) ausgeführt ist, wobei zwischen dem Aktivierungsbereich (4) und der Elektronikeinheit (30) das Dichtmittel (12) angeordnet ist und/oder
**dass** zwischen der Gehäuseschale (20) und der Elektronikeinheit (30) und zwischen der Elektronikeinheit (30) und der der Gehäuseschale (20) gegenüberliegenden Wandung (13) des Gehäusekörpers (10) das Dichtmittel (12) angeordnet ist.

6. Handhabe (1) nach einem der vorhergehenden Ansprüche,
**dadurch gekennzeichnet,**
**dass** ein erster Aktivierungsbereich (4) an der Gehäuseschale (20) vorliegt und ein zweiter Aktivierungsbereich (4) an der der Gehäuseschale (20) gegenüberliegenden Wandung (13) vorliegt, wobei insbesondere eine Berührung des ersten Aktivierungsbereiches (4) durch Elektronikeinheit (30) detektierbar ist und eine Annährung des zweiten Aktivierungsbereiches (4) an der der Gehäuseschale (20) gegenüberliegenden Wandung (13) detektierbar ist.

7. Handhabe (1) nach einem der vorhergehenden Ansprüche,
**dadurch gekennzeichnet,**
**dass** die Gehäuseschale (20) eine Aufnahme (11) aufweist, in der die Elektronikeinheit (30) sich zumindest teilweise befindet.

8. Handhabe (1) nach einem der vorhergehenden Ansprüche,
**dadurch gekennzeichnet,**
**dass** das Dichtmittel (12) aus einem Elastomer gebildet ist, insbesondere dass das Dichtmittel (12) ein Kunststoff auf Polyurethanbasis ist, das blasen- und/oder porenfrei ist.

9. Verfahren zur Herstellung einer Handhabe (1) eines Kraftfahrzeuges (2) nach einem der Patentansprüche 1 bis 8, mit
mindestens einem kapazitiven Sensorelement (31) zur Überwachung mindestens eines Aktivierungsbereiches (4) der Handhabe (1),
einem Gehäusekörper (10), der eine zumindest zu einer Seite geöffnete Aufnahme (11) für das Sensorelement (31) aufweist, wobei folgende Schritte ausgeführt werden:
- Vergießen des Sensorelementes (31) mit einer Vergussmasse (32), wobei nach dem Aushärten der Vergussmasse (32) eine Elektronikeinheit (30) entsteht,
- Einführen eines Dichtmittels (12) in die Aufnahme (11) des Gehäusekörpers (10), wobei das Dichtmittel (12) eine vielfach höhere Viskosität als die Vergussmasse (32) aufweist, so dass das Dichtmittel (12) zumindest teilweise aus der Aufnahme (11) herausragt,
- Verschließen der Aufnahme (11) mit einer Gehäuseschale (20), wobei zumindest teilweise das Dichtmittel (12) durch die Gehäuseschale (20) komprimiert wird und die innerhalb der Aufnahme (11) angeordnete Elektronikeinheit (30) durch das Dichtmittel (12) zumindest teilweise umfasst und abgedichtet wird.

10. Verfahren nach Anspruch 9,
**dadurch gekennzeichnet,**
**dass** die Elektronikeinheit (30) in die Aufnahme (11) eingebracht wird, bevor das Dichtmittel (12) in die Aufnahme (11) eingebracht wird und/oder dass die Vergussmasse (32) in die Gehäuseschale (20) eingebracht wird.

11. Verfahren nach Anspruch 9 bis 10,
**dadurch gekennzeichnet,**
**dass** das Dichtmittel (12) zwischen der Gehäuseschale (20) und der Elektronikeinheit (30) und/oder zwischen der Elektronikeinheit (30) und der der Gehäuseschale (20) gegenüberliegenden Wandung (13) des Gehäusekörpers (10) gelangt.

12. Verfahren nach Anspruch 9 bis 11,
**dadurch gekennzeichnet,**
**dass** das Dichtmittel (12) in die Aufnahme (11) eingegossen oder eingeschäumt wird und/oder dass die Elektronikeinheit (30) in der Aufnahme (11) mechanisch vorfixiert wird, bevor das Dichtmittel (12) in die Aufnahme (11) eingebracht wird.

13. Verfahren nach Anspruch 9 bis 12,
**dadurch gekennzeichnet,**
**dass** das Dichtmittel (12) in einem Bereich des Gehäusekörpers (10) aus der Aufnahme (11) herausragt, an dem der Aktivierungsbereich (4) der Handhabe (1) sich befindet.

## Claims

1. A handle (1) for a motor vehicle (2), in particular for a movable part (3) of the motor vehicle (2), comprising
a housing body (10) which has a receptacle (11) in which an electronics unit (30) for monitoring at least one activation region (4) of the handle (1) is arranged, the electronics unit (30) having at least one capacitive sensor element (31) which is surrounded by a casting compound (32),
wherein an electrically non-conductive sealing means (12) at least partially surrounds the electronics unit (30) and the sealing means (12) completely fills the receptacle (11) between the electronics unit (30) and at least one wall (13) of the housing body (10), thereby increasing the monitoring sensitivity of the activation region (4),
**characterized in that,**
the housing body (10) has a housing shell (20) which closes the receptacle (11) which is open on one side, the sealing means (12) being designed as an adhesive, as a result of which the electronics unit (30) is fastened in the receptacle (11) and/or the housing shell (20) is fastened to the housing body (10), the sealing means (12) being permanently elastic.

2. Handle (1) according to claim 1,
**characterized in that,**
that the electronics unit (30) is designed such that an approach of a user (5) to the handle (1) is detected, in particular a touch of the user (5) of the handle (1) is detected.

3. Handle (1) according to one of the previous claims,
**characterized in that,**
the sealing means (12) is arranged between the sensor element (31) and the wall (13) of the housing body (10) and/or the housing shell (20) in such a way that the electric field (6) of the capacitively acting sensor element (31) is increasingly directed towards the activation region (4).

4. Handle (1) according to one of the previous claims,
**characterized in that,**
the electronics unit (30) has an electronics housing (7) in which the sensor element (31) is arranged wherein the electronics housing (7) with the housing body (10) or the electronics housing (7) with the housing shell (20) form a monolithic component.

5. Handle (1) according to one of the previous claims,
**characterized in that,**
the electronics housing (7) is designed as a separate component from the housing body (10), with the sealing means (12) being arranged between the activation region (4) and the electronics unit (30) and/or
**in that** between the housing shell (20) and the electronics unit (30) and between the electronics unit (30) and the wall (13) of the housing body (10) opposite the housing shell (20), the sealing means (12) is arranged.

6. Handle (1) according to one of the previous claims,
**characterized in that,**
a first activation region (4) is present on the housing shell (20) and a second activation region (4) is present on the wall (13) opposite the housing shell (20), wherein in particular a contact of the first activation region (4) can be detected by an electronics unit (30) and an approach of the second activation region (4) to the wall (13) opposite the housing shell (20) can be detected.

7. Handle (1) according to one of the previous claims,
**characterized in that,**
the housing shell (20) has a receptacle (11) in which the electronics unit (30) is at least partially located.

8. Handle (1) according to one of the previous claims,
**characterized in that,**
the sealing means (12) is formed from an elastomer, in particular that the sealing means (12) is a plastic based on polyurethane which is essentially free of bubbles and/or pores.

9. Method for producing a handle (1) of a motor vehicle (2) according to one of the claims 1 to 8, comprising
at least one capacitive sensor element (31) for monitoring at least one activation region (4) of the handle (1),
a housing body (10), which has a receptacle (11) for the sensor element (31) open at least on one side wherein the following steps can be carried out:
- casting the sensor element (31) with a casting compound (32), whereby an electronics unit (30) is produced after the casting compound (32) has hardened,
- introducing a sealing means (12) into the receptacle (11) of the housing body (10), the sealing means (12) having a viscosity many times higher than the casting compound (32), so that the sealing means (12) at least partially protrudes from the receptacle (11),
- closing the receptacle (11) with a housing shell (20), wherein the sealing means (12) is at least partially compressed by the housing shell (20) and the electronics unit (30) arranged within the receptacle (11) is at least partially enclosed and sealed by the sealing means (12).

10. Method according to claim 9,
**characterized in that,**
the electronics unit (30) is inserted into the receptacle (11) before the sealing means (12) is introduced into the receptacle (11) and/or
the casting compound (32) is placed in the housing shell (20).

11. Method according to claim 9 to 10,
**characterized in that,**
the sealing means (12) passes between the housing shell (20) and the electronics unit (30) and/or between the electronics unit (30) and the wall (13) of the housing body (10) opposite the housing shell (20).

12. Method according to claim 9 to 11,
**characterized in that,**
the sealing means (12) is poured or foamed into the receptacle (11) and/or **in that** the electronics unit (30) is mechanically pre-fixed in the receptacle (11) before the sealing means (12) is introduced into the receptacle (11).

13. Method according to claim 9 to 12,
**characterized in that,**
the sealing means (12) protrudes from the receptacle (11) in an area of the housing body (10) where the activation region (4) of the handle (1) is located.

## Revendications

1. Une poignée (1) pour un véhicule automobile (2), en particulier pour une partie mobile (3) du véhicule automobile (2), comprenant
un corps de boîtier (10) qui présente un réceptacle (11) dans lequel est disposée une unité électronique (30) destinée à surveiller au moins une zone d'activation (4) de la poignée (1), l'unité électronique (30) présentant au moins un élément capteur capacitif (31) qui est entouré d'une masse de coulée (32),
dans lequel un moyen d'étanchéité (12) non conducteur de l'électricité entoure au moins partiellement l'unité électronique (30) et le moyen d'étanchéité (12) remplit complètement le réceptacle (11) entre l'unité électronique (30) et au moins une paroi (13) du corps de boîtier (10), ce qui augmente la sensibilité de surveillance de la zone d'activation (4), **caractérisé en ce que**,
le corps de boîtier (10) présente une coque de boîtier (20) qui ferme le réceptacle (11) ouvert d'un côté, le moyen d'étanchéité (12) étant réalisé sous forme de colle, ce qui fait que l'unité électronique (30) est fixée dans le réceptacle (11) et/ou la coque de boîtier (20) est fixée sur le corps de boîtier (10), le moyen d'étanchéité (12) étant élastique en permanence.

2. Poignée (1) selon la revendication 1,
**caractérisé en ce que**,
l'unité électronique (30) est conçue de telle sorte qu'une approche d'un utilisateur (5) de la poignée (1) est détectée, en particulier un toucher de l'utilisateur (5) de la poignée (1) est détecté.

3. Poignée (1) selon l'une des revendications précédentes,
**caractérisé en ce que**,
le moyen d'étanchéité (12) est disposé entre l'élément capteur (31) et la paroi (13) du corps de boîtier (10) et/ou de la coque de boîtier (20) de telle sorte que le champ électrique (6) de l'élément capteur (31) à action capacitive est dirigé de manière croissante vers la zone d'activation (4).

4. Poignée (1) selon l'une des revendications précédentes,
**caractérisé en ce que**,
l'unité électronique (30) comporte un boîtier électronique (7) dans lequel est disposé l'élément capteur (31) dans lequel le boîtier électronique (7) avec le corps de boîtier (10) ou le boîtier électronique (7) avec la coque de boîtier (20) forment un composant monolithique.

5. Poignée (1) selon l'une des revendications précédentes,
**caractérisé en ce que**,
le boîtier électronique (7) est conçu comme un composant séparé du corps de boîtier (10), le moyen d'étanchéité (12) étant disposés entre la zone d'activation (4) et l'unité électronique (30) et/ou
**en ce que** entre la coque du boîtier (20) et l'unité électronique (30) et entre l'unité électronique (30) et la paroi (13) du corps de boîtier (10) opposée à la coque de boîtier (20), le moyen d'étanchéité (12) est disposé.

6. Poignée (1) selon l'une des revendications précédentes,
**caractérisé en ce que**,
une première zone d'activation (4) est présente sur la coque de boîtier (20) et une deuxième zone d'activation (4) est présente sur la paroi (13) opposée à la coque de boîtier (20), un contact de la première zone d'activation (4) pouvant être détecté en particulier par l'unité électronique (30) et une approche de la deuxième zone d'activation (4) vers la paroi (13) opposée à la coque de boîtier (20) pouvant être détectée.

7. Poignée (1) selon l'une des revendications précédentes,
**caractérisé en ce que,**
la coque de boîtier (20) comporte un réceptacle (11) dans lequel se trouve au moins partiellement l'unité électronique (30).

8. Poignée (1) selon l'une des revendications précédentes,
**caractérisé en ce que,**
le moyen d'étanchéité (12) est formé d'un élastomère, en particulier que le moyen d'étanchéité (12) est une matière plastique à base de polyuréthane qui est exempte de bulles et/ou de pores.

9. Procédé de fabrication d'une poignée (1) d'un véhicule automobile (2) selon l'une des revendications 1 à 8, avec
au moins un élément capteur capacitif (31) pour surveiller au moins une zone d'activation (4) de la poignée (1),
un corps de boîtier (10), qui présente un réceptacle (11) pour l'élément capteur (31) ouvert au moins d'un côté dans lequel les étapes suivantes peut être réalisées :
- Coulée de l'élément capteur (31) avec une masse de coulée (32), une unité électronique (30) étant produite après le durcissement de la masse de coulée (32),
- Introduction d'un moyen d'étanchéité (12) dans le réceptacle (11) du corps de boîtier (10), le moyen d'étanchéité (12) ayant une viscosité plusieurs fois supérieure à celle de !a masse de coulée (32), de sorte que le moyen d'étanchéité (12) dépasse au moins partiellement du réceptacle (11),
- Fermeture du réceptacle (11) avec un coque de boîtier (20), le moyen d'étanchéité (12) étant au moins partiellement comprimé par le coque de boîtier (20) et l'unité électronique (30) disposée à l'intérieur du réceptacle (11) étant au moins partiellement entourée et fermée par le moyen d'étanchéité (12).

10. Procédé selon la revendication 9,
**caractérisé en ce que,**
l'unité électronique (30) est insérée dans !e réceptacle (11) avant que le moyen d'étanchéité (12) ne soit introduit dans le réceptacle (11) et/ou que le masse de coulée (32) est placé dans la coque de boîtier (20).

11. Procédé selon la revendication 9 à 10,
**caractérisé en ce que,**
le moyen d'étanchéité (12) passe entre la coque de boîtier (20) et l'unité électronique (30) et/ou entre l'unité électronique (30) et la paroi (13) du corps de boîtier (10) opposée à la coque de boîtier (20).

12. Procédé selon la revendication 9 à 11,
**caractérisé en ce que,**
le moyen d'étanchéité (12) est versé ou moussé dans le réceptacle (11) et/ou que l'unité électronique (30) est préfixée mécaniquement dans le réceptacle (11) avant que le moyen d'étanchéité (12) ne soit introduit dans le réceptacle (11).

13. Procédé selon la revendication 9 à 12,
**caractérisé en ce que,**
le moyen d'étanchéité (12) fait saillie du réceptacle (11) dans une zone du corps de boîtier (10) où se trouve la zone d'activation (4) de la poignée (1).
